# EUROPEAN PATENT SPECIFICATION

(11) **EP 4 786 207 B1**
(45) Date of publication and mention of the grant of the patent: **09.12.2026**
(21) Application number: 26153243.6
(22) Date of filing: 21.01.2026
(51) Int. Cl.: B60C 1/00, C08L 9/00

(54) **RUBBER COMPOSITION FOR TYRES**
KAUTSCHUKZUSAMMENSETZUNG FÜR REIFEN
COMPOSITION DE CAOUTCHOUC POUR PNEUMATIQUES

(30) Priority: 31.01.2025 LU 509832
(43) Date of publication of application: 05.08.2026
(73) Proprietor: Apollo Tyres Global R&D B.V., 7521 PT Enschede (NL)
(72) Inventor: Mondal, Anup, 7521PT Enschede (NL); Andrzejewska-Scavo, Zuzanne Jadwiga, 7521PT Enschede (NL); Thottungal Mohamed, Mohamed Tharik, 7521PT Enschede (NL)
(74) Representative: Michalski Hüttermann & Partner mbB

(56) References cited:
- EP-A1- 3 281 979
- EP-A1- 3 608 362
- US-A1- 20230 383 101

## Description

The present invention relates to a cross-linkable rubber composition, a cross-linked rubber composition obtained by cross-linking the rubber composition, a method of preparing a tyre and a tyre, particularly an all-season tyre or a winter tyre.

Tread rubber is one of the important portions of a pneumatic tyre which contributes enormously to the overall performance of a tyre. A tyre has to perform well in severe weather conditions, and it has to exhibit a variety of performances, while particularly all-season tyres and winter tyres have to observe snow performance.

EP 4 421 119 A1 discloses a rubber composition with a balanced property of snow and wet grip. The rubber composition comprises a blend of four rubbers selected from a natural rubber (NR), a polybutadiene rubber (BR), and first and second solution polymerized styrene-butadiene rubbers (SSBRs), a first silica filler having a BET surface area of ≥ 150 m²/g to ≤ 200 m²/g (according to ASTM D1993), and a second silica filler having a BET surface area of ≥ 70 m²/g to ≤ 100 m²/g (according to ASTM D1993), a resin, and ≥ 1 phr to ≤ 20 phr of first and second coupling agents, wherein the first coupling agent is a mercaptosilane and the second coupling agent is selected from a disulfide silane, a tetrasulfide silane, or a combination thereof.

For a winter and all season tyre, there is constant need for improved snow performance.

Further compounds are used in rubber compositions for tyre treads and other tyre components as additives and fillers to achieve various effects, and magnesium hydroxide has been employed in rubber compositions. JP 4384847 B2 discloses a pneumatic tyre using a rubber composition with reduced air permeability. Inorganic filler compounds for the carcass rubber are described, examples of inorganic fillers including silica, calcium carbonate, magnesium carbonate, aluminum hydroxide, magnesium hydroxide, alumina, clay, talc, magnesium oxide, and the like, that may be used alone or in combination.

US 6,489,389 B1 describes rubber compositions for tyre treads containing a rubber component containing a styrene-butadiene rubber and a powdery inorganic compound that may be selected from the group consisting of aluminum hydroxide (Al(OH)₃), magnesium hydroxide (Mg(OH)₂), and calcium hydroxide (Ca(OH)₂).

EP 2794286 B1 and FR 2999584 B1 describe rubber compositions for tyres based on at least one diene elastomer, a reinforcing filler comprising silica, a crosslinking system, and an alkali or alkaline earth metal hydroxide, the composition being essentially free of guanidine derivative. FR 3005470 B1 relates to compositions comprising a particular triazine compound and an alkali metal or alkaline-earth metal hydroxide. DE 102018207737 A1 relates to a sulfur-crosslinkable rubber mixture comprising an inorganic material comprising at least one metal cation that may be selected from huntite, hydromagnesite, calcium carbonate, magnesium hydroxide and aluminum hydroxide.

US 20090297827 A1 describes a rubber composition with improved vulcanization kinetics based on at least one diene elastomer, a reinforcing filler and a coupling agent, wherein said reinforcing filler comprises synthetic magnesium hydroxide covered with silica.

However, a use of any component, such as a metal hydroxide, in combination with different rubbers, silica or resins, improves certain properties at the sacrifice of other properties. The present invention has the object to provide a composition for a tyre which provides for improvement in snow performance.

This object is achieved by a cross-linkable rubber composition according to claim 1, a cross-linked rubber composition according to claim 10, a method according to claim 14 and a tyre according to claim 15. Advantageous embodiments are the subject of dependent claims. They may be combined freely unless the context clearly indicates otherwise.

Hence, a cross-linkable rubber composition is provided, the cross-linkable rubber composition comprising, per hundred parts by weight of rubber (phr):
100 phr of a blend of a natural rubber (NR), a polybutadiene rubber (BR), and first and second solution polymerized styrene-butadiene rubbers (SSBR), the blend comprising
≥ 10 phr to ≤ 40 phr of NR,
≥ 20 phr to ≤ 80 phr of BR,
≥ 10 phr to ≤ 50 phr of the first SSBR having a glass transition temperature T_{g}, determined by differential scanning calorimetry (DSC) according to ISO 22768, in a range of ≥ -30°C to ≤ 0°C, and
≥ 10 phr to ≤ 50 phr of the second SSBR having a glass transition temperature T_{g}, determined by differential scanning calorimetry (DSC) according to ISO 22768, in a range of ≥ -120°C to ≤ -40°C,
≥ 60 phr to ≤ 130 phr of a first silica filler having a BET surface area in a range of ≥ 150 m²/g to ≤ 200 m²/g, determined according to ASTM D1993, and
≥ 50 phr to ≤ 100 phr of a second silica filler having a BET surface area in a range of ≥ 70 m²/g to ≤ 100 m²/g, determined according to ASTM D1993, and
a resin,
**wherein** the rubber composition comprises in a range of ≥ 1 phr to ≤ 40 phr of magnesium hydroxide.

It has surprisingly been found that magnesium hydroxide can balance an increased amount of silica filler in a rubber composition comprising a blend of four rubbers and two silicas of different BET surface area. Magnesium hydroxide has been found to provide for a decreased stiffness which can balance an increased amount of silica in the rubber composition and provide improved handling performance on snow, without compromising rolling resistance. It could be seen that rolling resistance or respective indicators, such as hysteresis, remained on a sufficient level.

The term "phr" as used herein, and according to conventional practice, refers to "parts by weight of a respective material per 100 parts by weight of rubber or elastomer". It will be understood that in formulations discussed in connection with the present invention, in accordance with this conventional practice, the phr amount of all rubber components adds up to 100 phr. To differentiate between two different solution polymerized styrene-butadiene rubbers (SSBRs), terms like first SSBR and second SSBR are used. In embodiments where two different silica fillers are present, the terms first silica filler and second silica filler are used likewise to differentiate between the respective silicas. The cross-linkable rubber composition according to the invention comprises cross-linkable groups in the individual rubber components. They may be cross-linked (cured, vulcanised) by methods known to a skilled person in the rubber technology field.

As used herein, the term "handling" refers to how well a vehicle handles the road and how well the vehicle responds to steering input. Tyre handling is a measurement of what a driver can perform with a car such as steering, stability during lane change and cornering, lap time, accelerating and braking.

The magnesium hydroxide advantageously provided improved snow performance of a tyre tread cured from the rubber composition described herein.

In embodiments, the magnesium hydroxide has i) a D50 particle diameter in a range of ≥ 0.8 µm to ≤ 2.0 µm, preferably in a range of ≥ 1.6 µm to ≤ 2.0 µm, and/or ii) a BET surface area in a range of ≥ 4.5 m²/g to ≤ 10.5 m²/g, preferably about 5 m²/g. Examples of commercial magnesium hydroxide are Magnifin^{®} H-5, H-7 and H-10 (Huber Advanced Materials), preferably Magnifin^{®} H-5.

The D50 particle diameter was determined according to ISO 13320 using laser scattering CILAS 1064 L. The BET surface area was determined according to ISO 18852:2015 using a Gemini VII device. The oil absorption was determined according to ISO 4656.

In embodiments, the rubber composition comprises in a range of ≥ 5 phr to ≤ 35 phr, preferably in a range of ≥ 10 phr to ≤ 30 phr, of magnesium hydroxide. Using magnesium hydroxide in these ranges can achieve improvement in snow performance. It is assumed that magnesium hydroxide can provide for improved snow performance despite increased silica content.

The rubber composition comprises two silica fillers of different BET surface area. The BET (Brunauer, Emmett and Teller) theory is commonly used to evaluate gas adsorption data and generate a specific surface area result expressed in units of area per mass of sample (m²/g). The technique is referenced by several standard organizations such as ASTM. The first silica filler has a BET surface area in a range of ≥ 150 m²/g to ≤ 200 m²/g (according to ASTM D1993) and the second silica filler has a BET surface area in a range of ≥ 70 m²/g to ≤ 100 m²/g (according to ASTM D1993).

It is assumed that the combination of first and second silica at least partially provides for the improvement in the handling while maintaining rolling resistance of the tyre. In embodiments, the rubber composition comprises first and second silica filler in an amount in a range of ≥ 150 phr to ≤ 180 phr, preferably in a range of ≥ 160 phr to ≤ 170 phr.

It is assumed that filler levels of silica, particularly of a combination of first and second silica, in these ranges can support favourable handling properties.

In embodiments, the first silica filler has a BET surface area in a range of ≥ 150 m²/g to ≤ 170 m²/g (according to ASTM D1993). Silica which meets a BET surface area of 150 to 200 m²/g or 150 to 170 m²/g (according to ASTM D1993) includes highly dispersible silica (HDS) and semi HDS. Highly dispersible silica may be precipitated from a silicate solution, for example, by hydrolysis and/or high temperature oxidation conversion. Examples of commercial silica having a BET surface area of 150 to 170 m²/g are Ultrasil^{®} 7000GR (Evonik Industries AG), Zeosil^{®}1165MP (Solvay AG), and Hi-Sil^{®} EZ160G-D (PPG Industries).

In embodiments, the second silica filler has a BET surface area in a range of ≥ 75 m²/g to ≤ 95 m²/g (according to ASTM D1993). An example of a commercial silica having a BET surface area of 75 to 95 m²/g is Zeosil^{®}1085 (Solvay AG).

In embodiments, the rubber composition comprises the first silica filler in an amount in a range of ≥ 70 phr to ≤ 100 phr, preferably in a range of ≥ 80 phr to ≤ 95 phr, the first silica filler preferably having a BET surface area in a range of ≥ 150 m²/g to ≤ 170 m²/g, determined according to ASTM D1993.

In embodiments, the rubber composition comprises the second silica filler in an amount in a range of ≥ 65 phr to ≤ 85 phr, preferably in a range of ≥ 70 phr to ≤ 80 phr, where the second silica filler preferably has a BET surface area in a range of ≥ 75 m²/g to ≤ 95 m²/g, determined according to ASTM D1993. An increase in the amount of silica with a BET surface area in a range of ≥ 75 m²/g to ≤ 95 m²/g in a silica blend can result in enhancing the snow handling while maintaining rolling resistance.

The rubber composition may comprise of from ≥ 80 phr to ≤ 95 phr of the first silica filler and of from ≥ 70 phr to ≤ 80 phr of the second silica filler. Embodiments of the rubber composition comprising approximately equal amounts of first and second silica filler can provide particularly good morphology and handling properties.

The rubber composition may comprise carbon black. The rubber composition may comprise carbon black in an amount in a range of ≥ 1 phr to < 10 phr.

The composition comprises a blend of four rubbers: a natural rubber (NR), a polybutadiene rubber (BR), and first and second solution polymerized styrene-butadiene rubbers (SSBRs) of different glass transition temperature. Without being bound to a specific theory it is assumed that the polymer blend contributes to the good handling performance on different underground of the cured composition that is necessary for all-season tyres.

In embodiments, the butadiene rubber (BR) has a *cis* group content, as determined by infrared spectroscopy (IR), of ≥ 95%, preferably of ≥ 97%. A butadiene rubber (BR) with a high *cis* group content is obtained under neodymium catalysis (Nd BR). The *cis* content of the polybutadiene rubber may be determined with FTIR (Fourier-transform infrared spectroscopy). Butadiene rubber obtained under neodymium catalysis may be denoted a *cis* 1,4-polybutadine.

The natural rubber may be a sheet processed natural rubber such as a Ribbed Smoked Sheets (RSS) rubber or may be a Technically Specified Rubber (TSR). TSR grades such as TSR10 or TSR20 are preferred for a tyre tread compound.

The first SSBR has a glass transition temperature T_{g} of ≥ -30°C to ≤ 0 °C. The glass transition temperatures T_{g} of the rubber compounds as referred herein are measured by differential scanning calorimetry (DSC) according to ISO 22768. This norm specifies a heating rate of 20 °C/min. Preferably the first SSBR has a glass transition temperature T_{g} of ≥ -28 °C to ≤ -20°C. The first SSBR thus is a rubber with comparatively high T_{g}.

Such a SSBR preferably comprises alkoxysilane groups such as -Si(OR)₃ with each R independently being an alkyl rest. Preferred are trimethoxysilane groups and triethoxysilane groups. Furthermore, this SSBR also comprises primary amino groups -NH₂. Such dual-functionalised SSBRs are commercially available and may be synthesised from non-functionalised SSBRs by methods known in the art such as hydrosilylation with H-Si(OR)₃ compounds, thiol-ene-coupling using aminothiol compounds and hydrosilylation with H-Si(OR)₂-Linker-NH₂ compounds. For example, and as taught in US 7,342,070, the first rubber may be of the formula (I) or (II): 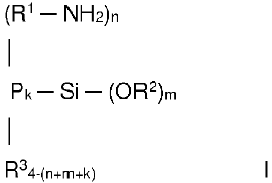 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 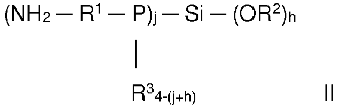 wherein P, R¹, R² and R³ have the same definitions as give for the above-mentioned formula I, j is an integer of 1 to 3, and h is an integer of 1 to 3, with the provision that j+h is an integer of 2 to 4. The first SSBR may comprise ≥ 25% to ≤ 35%, preferably ≥ 27 to ≤ 29%, as determined by nuclear magnetic resonance (NMR) spectroscopy, of styrenic groups. In the first SSBR ≥ 75 mol-%, preferably ≥ 90 mol-% to ≤ 100 mol-%, as determined by nuclear magnetic resonance (NMR) spectroscopy, of the alkoxysilane groups and the primary amino groups are located at the chain ends of the rubber polymer chains. A specific example for a commercial SSBR having a T_{g} of ≥ -30 °C to ≤ 0 °C is HPR850 manufactured by ENEOS Corporation.

The first SSBR is combined with a second low T_{g} SSBR. The second solution polymerized styrene-butadiene rubber (SSBR) has a glass transition temperature T_{g} (measured by differential scanning calorimetry (DSC) according to ISO 22768) of ≥ - 120 °C to ≤ - 40 °C. Preferably, the second **SSBR** has a glass transition temperature T_{g} of ≥ -90 °C to ≤ -50°C, more preferably of ≥ -80 °C to ≤ -60°C. Using a low T_{g} SSBR in combination with a first high T_{g} SSBR can improve snow and rolling resistance performance in balance with wet grip. Preferably, the second SSBR is a functionalised styrene-butadiene rubber. A specific example for a commercial SSBR having a T_{g} of ≥ - 120 °C to ≤ - 40 °C is SPRINTAN^{™} SLR 3402, with a T_{g} of -65 °C.

Preferably, the cross-linkable rubber composition may comprise the first SSBR combined with the second SSBR in an amount of < 50 phr. Such amount may balance snow and rolling resistance performance in balance with wet grip. More preferred, the cross-linkable rubber composition may comprise the first SSBR combined with the second SSBR in an amount in phr equal to or lower than the total phr amount of BR in the composition. A blend of the first and second SSBR in total amount of less than or equal to the phr loading of BR can contribute to maintaining a desired Tg of the rubber composition to balance snow and rolling resistance performance without deteriorating the wet grip.

In embodiments, the composition comprises:
≥ 10 phr to ≤ 35 phr, preferably ≥ 15 phr to ≤ 30 phr, of NR; and/or
≥ 30 phr to ≤ 60 phr, preferably ≥ 35 phr to ≤ 55 phr, of BR; and/or
≥ 10 phr to ≤ 30 phr, preferably ≥ 10 phr to ≤ 25 phr, of the first SSBR; and/or
≥ 10 phr to ≤ 40 phr, preferably ≥ 15 phr to ≤ 30 phr, of the second SSBR.

It is understood that the phr amount of all rubber components in the composition adds up to 100 phr. In these ranges the rubbers can improve snow handling of the cured tread rubber combined with favourable wet grip.

The cross-linkable rubber composition may comprise at least one coupling agent. The cross-linkable rubber composition may comprise in a range of ≥ 1 phr to ≤ 25 phr of at least one coupling agent. In embodiments, the rubber composition may comprise first and second coupling agents.

In embodiments, the rubber composition comprises in a range of ≥ 5 phr to ≤ 20 phr of a mercaptosilane. In the context of this invention a "mercaptosilane" denotes a silane coupling agent containing one or more mercapto group(s) (-SH group, also denoted thiol group, sulfanyl group or sulfhydryl group) or other sulfur-containing groups that function as protected mercapto groups or react to form a mercapto group. Examples for mercaptosilanes are 3-mercaptopropylmethyldimethoxysilane, 3-mercaptopropyltrimethoxysilane (MTMO), (3-mercaptopropyl)triethoxysilane (MPTES), 3-mercaptopropyl-di(tridecan-1-oxy-13-penta(ethyleneoxide)) ethoxysilane (VP Si363), 3-octanoylthio-1-propyltriethoxysilane (NXT), thiocyanatosilane (TCPTEO), trimethoxy(3-thiocyanatopropyl)silane, triethoxy(3- thiocyanatopropyl)silane and 3-isocyanatopropyltriethoxysilane. Commercial examples for mercaptosilane are VP Si 363 available from Evonik Industries and NXT available from Momentive. The use of a mercaptosilane is assumed to improve the rolling resistance of the cross-linked rubber composition.

In embodiments, the rubber composition comprises in a range of ≥ 5 phr to ≤ 15 phr of a mercaptosilane and in a range of ≥ 1 phr to ≤ 10 phr of a silane selected from a disulfide silane, a tetrasulfide silane, or a combination thereof. A preferred example for a disulphide silane is bis-(3-triethoxysilylpropyl)disulfide (TESPD) available from Evonik Industries. A preferred example for a tetrasulphide silane is bis-(3-triethoxysilylpropyl)tetrasulfide (TESPT) available from Evonik Industries. Further disulfide silane, a tetrasulfide silane, or a combination thereof may be selected from the group comprising ethoxy and/or methoxy groups selected from the group of vinyltriethoxysilane(VTEO), Vinyltris(2-methoxyethoxy)silane (VTMOEO), 3 - chloropropyltrimethoxy silane (CPTEO), 3-methacryloxypropyl-trimethoxysilane (MEMO), 3-aminopropyltriethoxysilane (AMEO), propyltriethoxysilane (PTEO), octyltriethoxysilane (OCTEO).

The cross-linkable rubber composition may comprise in a range of ≥ 10 phr to ≤ 30 phr, preferably in a range of ≥ 15 phr to ≤ 25 phr, of a resin. The resin may have a glass transition temperature T_{g} of ≥ 30 °C, preferably in a range of ≥ 60 °C to ≤ 130 °C. A variety of aliphatic or aromatic resins may be used. Important base monomers are indene, methyindenes, dicyclopentadiene, styrene, alpha-methylstyrene and various vinyl toluenes. The resin may be selected from the group of alpha-methyl styrene (AMS) resin, terpene resin, polyterpene resin, terpene phenolic resin, a C5 resin, C9 resin, coumarone indene resin, dicyclopentadiene (DCPD) resin or a combination thereof. The term "C5 resin" refers to hydrocarbon resins obtained from the polymerization of C5 aliphatic olefin and diolefin. The term "C9 resin" refers to aromatic hydrocarbon resins made from C9, or more generally from a C8 to C10 fraction, aromatic hydrocarbons. Further examples for aromatic resins are coumarone-indene resins.

In embodiments, the composition comprises an alpha-methyl styrene resin. The term "alpha-methyl styrene resin" refers to copolymer resins of styrene and alpha-methyl styrene. In embodiments, the composition comprises in a range of ≥ 10 phr to ≤ 30 phr, preferably in a range of ≥ 15 phr to ≤ 25 phr, of an alpha-methyl styrene resin. Such embodiments can provide improved wet grip properties.

The cross-linkable rubber composition may be sulfur-vulcanizable and/or peroxide-vulcanizable. A usable sulfur-vulcanizing agent is elemental sulfur. Additives can be added to the cross-linkable rubber composition. Examples of usual additives are stabilizers, antioxidants, lubricants, fillers, dyes, pigments, or flame retardants. The cross-linkable rubber composition may be compounded by **methods** generally known in the art, such as mixing the sulfur-vulcanizable rubbers with commonly used additives such as, for example, sulfur donors, curing aids, such as activators and retarders, and processing additives, such as oils, resins including tackifying resins, plasticizers, fillers, pigments, fatty acid, zinc oxide, waxes, and antioxidants.

Another aspect of the present invention relates to a cross-linked rubber composition that is obtained by cross-linking a rubber composition according to the invention as described herein.

In embodiments, the cross-linked rubber composition may have an E' value at -20 °C, determined by Dynamic Mechanical Analysis (DMA) in accordance with ISO 4664-1, in a range of ≥ 30 MPa to ≤ 55 MPa. Such ranges are indicative of good snow performance for the cured tyre.

In embodiments, the cross-linked rubber composition may have a hardness °Sh A, determined from durometer measurements according to ISO 48-4:2018, in a range from ≥ 42 °Sh A to ≤ 52 °Sh A. Such ranges are indicative of good snow performance for the cured tyre.

In embodiments, the cross-linked rubber composition may have a modulus M300%, determined from tensile measurements according to ISO 37 as further described in the specification, in a range from ≥ 4 MPa to ≤ 5.5 MPa. Such ranges are indicative of good snow performance for the cured tyre.

The present invention also relates to a method of preparing a tyre, comprising the steps of:
- providing a tyre assembly comprising a cross-linkable rubber composition according to the invention, and
- cross-linking at least the cross-linkable rubber composition according to the invention in the tyre assembly.

The present invention also encompasses a tyre comprising a tyre tread, characterised in that the tyre tread comprises a cross-linked rubber composition according to the invention. In embodiments, the tyre is an all-season tyre or a winter tyre.

The present invention will be further described with reference to the following examples without wishing to be limited by them.

### Methods:

Hardness Test: Hardness tests were performed on a durometer with scale A as per ISO 48-4:2018 to determine the indentation hardness (Shore hardness, given in Shore A) of the vulcanized rubber.

Tensile strength: Tensile strength analysis was performed for cured samples on a Zwick Z005 apparatus with a speed of 500 mm/min speed. Samples were cured at 160°C for 20 minutes and standard tensile specimens were cut from rubber sheet according to ISO 37 standard. Measuring tensile strength and force elongation properties via tensile method also determines modulus at various elongations i.e. 25%, 100%, 200% and 300% which indicates static stiffness.

Rebound: Rebound measurements were performed for cured samples on a Zwick/Roell 5109 Rebound Resilience Tester according to the standardised ISO4662 method at 23°C and 70°C.

Temperature sweep by DMA: Dynamic mechanical analysis (DMA) analysis was performed for cured samples by Netzsch Gabo Eplexor 500N in tensile mode. DMA was performed by temperature sweep at constant frequency 10 Hz with 3% strain in a temperature range of 25°C to 80°C. DMA was also performed by temperature sweep at constant frequency 10 Hz with 0.1 % strain in a temperature range of -60°C to 0°C. For determination of tan delta DMA analysis was performed in tensile mode. For determination of storage modulus (dynamic stiffness) E' DMA analysis was performed in tensile mode.

Durometer hardness (shore A) was measured to relate to physical properties and snow performance. Elongation at break (M300%) was measured relating to snow performance.

Tan delta (70°C) was measured relating to rolling resistance (RR).

Rebound at 23°C was measured relating to wet grip.

Storage modulus E' (-20°C) was measured relating to snow performance.

G' (0°C) was measured relating to handling.

Tan delta (0°C) was measured relating to wet grip.

G' (20°C) was measured relating to handling.

T tan_max was measured relating to snow performance (Tg- glass transition temperature).

### Example 1

In accordance with the preceding, cross-linkable rubber compositions were prepared according to the following table 1. In a first step, the rubber components were added and mixed, followed by a second step wherein the additives were added and mixed and a last step wherein the curing package was added. Composition Ref1 is a comparative example and compositions M1, M2 and M3 are compositions according to the invention. Amounts for the components are given in phr. Unless stated otherwise, glass temperatures given were determined by DSC according to ISO 22768.

**Table 1: Compositions**

| Component | Ref1 (phr) | M1 (phr) | M2 (phr) | M3 (phr) |
|---|---|---|---|---|
| NR | 15 | 15 | 15 | 15 |
| BR | 50 | 50 | 50 | 50 |
| SSBR 1 | 10 | 10 | 10 | 10 |
| SSBR 2 | 25 | 25 | 25 | 25 |
| Silica 1 | 90 | 90 | 90 | 85 |
| Silica 2 | 76 | 76 | 76 | 76 |
| Silane 1 | 8.5 | 8.5 | 8.5 | 8.5 |
| Silane 2 | 5.3 | 5.3 | 5.3 | 5.3 |
| Hydrocarbon resin | 15 | 15 | 15 | 15 |
| Carbon black | 4 | 4 | 4 | 4 |
| Magnesium hydroxide | - | 10 | 20 | 30 |
| Process oil | 42 | 42 | 42 | 42 |

Natural rubber (NR) was TSR 20, with a Mooney Viscosity 80 and a Tg of -70 °C.

BR rubber was Nd catalyzed 1,4 butadiene rubber with a cis content of 97%, supplied by Arlanxeo (Buna CB 25).

SSBR 1 was HPR850 manufactured by ENEOS Corporation, a solution polymerized styrene-butadiene rubber (SSBR) comprising an alkoxysilane group and a primary amino group with a styrene content of 27.5 wt.% and vinyl content of 59% and a T_{g} of -25 °C. Non-oil extended product was used.

SSBR 2 was SPRINTAN^{™} SLR 3402, a functionalised SSBR and had a styrene content of 15%, a vinyl content of 30% and a T_{g} of -65 °C.

Silica 1 was High Dispersible Silica (P-Type) with a BET surface of 150-180 m²/g supplied by PPG Industries.

Silica 2 was Zeosil^{®}1085 with a BET surface of 90 m²/g from Solvay.

Carbon black was N339 (HAF-HS) supplied by China Synthetic Rubber.

Silane 1 was Silaan VP Si 363 Degussa supplied by Evonik Industries.

Silane 2 was TESPD (disulphide silane) Si 266 supplied by Evonik Industries.

The hydrocarbon resin was Impera^{™} P1504 Hydrocarbon Resin supplied by Synthomer. Magnesium hydroxide was Magnifin^{®} H-5 supplied by Huber Advanced Materials.

The process oil was TDAE (treated distillate aromatic extracts), a rubber processing oil with high aromatic content, supplied by Klaus Dahleke GmbH & Co.

**Table 2: Test results**

| Component | Ref1 | M1 | M2 | M3 |
|---|---|---|---|---|
| Durometer hardness shore A. 9' at 170°C | | | | |
| Hardness (median) [°Sh A] | 59.5 | 46.6 | 46.5 | 45.5 |

| Hardness shore A. 2d 100C | | | | |
|---|---|---|---|---|
| Hardness shore A, 2d 100C [°Sh A] | 66 | 55.7 | 56 | 55.2 |

| Tensile strength compounds 20' 160°C | | | | |
|---|---|---|---|---|
| Elongation at break [%] | 470.97 | 637.99 | 662.02 | 686.02 |
| M300% [MPa] | 7.83 | 4.95 | 5.03 | 4.49 |
| Tensile strength [MPa] | 12.8 | 11.73 | 12.45 | 11.27 |

| Rebound at 23°C, 12' 170°C | | | | |
|---|---|---|---|---|
| E' (-20°C) [MPa] | 97.03 | 51.48 | 46.97 | 37.11 |

| DMA tensile -10°C to 80°C at 3.0% | | | | |
|---|---|---|---|---|
| Tan delta (70°C) 3.0% | 0.17 | 0.17 | 0.16 | 0.15 |

The results show for the compositions M1 to M3 compared to the reference composition a reduction in median hardness and shore A hardness, which is considered an indicator of better snow performance. Further, all compositions M1 to M3 showed a reduction in the modulus at 300% elongation (M300%), which also is considered an indicator of better snow performance. The compositions M1 to M3 moreover showed a significant decrease of storage modulus E' (-20°C) which is considered an indicator of better snow handling. All compositions M1 to M3 showed an increase in elongation at break with small trade-off of the tensile strength, which is considered an indicator for improvement of mechanical properties.

The indicator of rolling resistance (RR), tan delta at 70°C, illustrates that rolling resistance was maintained compared to the reference, as was the rebound at 70°C. The rebound at 23°C that is a well-known indicator for wet grip showed that wet grip was balanced.

The results illustrate an improvement in snow performance without compromising rolling resistance and wet grip.

### Example 2

As detailed in example 1, cross-linkable rubber compositions were prepared according to the following table 3. Composition Ref2 is a comparative example and composition M4 is the composition according to the invention.

**Table 3: Compositions**

| Component | Ref2 (phr) | M4 (phr) |
|---|---|---|
| NR | 15 | 15 |
| BR | 50 | 50 |
| SSBR 1 | 10 | 10 |
| SSBR 2 | 25 | 25 |
| Silica 1 | 90 | 90 |
| Silica 2 | 76 | 76 |
| mercaptosilane | 14 | 14 |
| Hydrocarbon resin | 15 | 15 |
| Carbon black | 4 | 4 |
| Magnesium hydroxide | - | 30 |
| Process oil | 42 | 42 |

Natural rubber (NR), BR rubber, SSBR 1, SSBR 2, Silica 1, Silica 2, carbon black, mercaptosilane, the hydrocarbon resin alpha-methyl styrene (AMS), magnesium hydroxide and process oil were as given in example 1.

**Table 4: Test results**

| Component | Ref2 | M4 |
|---|---|---|
| Hardness (median) [°Sh A] | 61.10 | 49.70 |
| Hardness shore A, 2d 100C [°Sh A] | 69.20 | 60.50 |
| Elongation at break [%] | 410.73 | 661.06 |
| M300% [MPa] | 9.47 | 4.38 |
| Tensile strength [MPa] | 12.85 | 10.74 |
| Rebound (70°C) [%] | 53.70 | 45.30 |
| Rebound (23°C) [%] | 34.10 | 34.10 |
| E' (-20°C) [MPa] | 71.14 | 49.15 |
| T tan_max [°C] | -44.22 | -41.23 |
| Tan delta (70°C) 3.0% | 0.15 | 0.17 |

The results show for the composition M4 compared to the reference composition a reduction in median hardness and shore A hardness, which is considered an indicator of better snow performance. Further, the composition M4 showed a reduction in the modulus at 300% elongation (M300%), which also is considered an indicator of better snow performance. The composition M4 showed an increase in elongation at break with small trade-off of the tensile strength, which is considered an indicator for improvement of mechanical properties. The indicator of rolling resistance (RR), tan delta at 70°C, illustrates that rolling resistance was maintained compared to the reference, as did the rebound at 70°C. The rebound at 23°C showed that wet grip was improved or balanced.

The results illustrate an improvement in snow performance without compromising rolling resistance.

## Claims

1. A cross-linkable rubber composition, the cross-linkable rubber composition comprising, per hundred parts by weight of rubber (phr):
100 phr of a blend of a natural rubber (NR), a polybutadiene rubber (BR), and first and second solution polymerized styrene-butadiene rubbers (SSBR), the blend comprising
≥ 10 phr to ≤ 40 phr of NR,
≥ 20 phr to ≤ 80 phr of BR,
≥ 10 phr to ≤ 50 phr of the first SSBR having a glass transition temperature T_{g}, determined by differential scanning calorimetry (DSC) according to ISO 22768, in a range of ≥ -30°C to ≤ 0°C, and
≥ 10 phr to ≤ 50 phr of the second SSBR having a glass transition temperature T_{g}, determined by differential scanning calorimetry (DSC) according to ISO 22768, in a range of ≥ -120°C to ≤ -40°C,
≥ 60 phr to ≤ 130 phr of a first silica filler having a BET surface area in a range of ≥ 150 m²/g to ≤ 200 m²/g, determined according to ASTM D1993, and
≥ 50 phr to ≤ 100 phr of a second silica filler having a BET surface area in a range of ≥ 70 m²/g to ≤ 100 m²/g, determined according to ASTM D1993, and
a resin,
wherein the rubber composition comprises in a range of ≥ 1 phr to ≤ 40 phr of magnesium hydroxide.

2. The rubber composition according to claim 1, wherein the rubber composition comprises in a range of ≥ 5 phr to ≤ 35 phr, preferably in a range of ≥ 10 phr to ≤ 30 phr, of magnesium hydroxide.

3. The rubber composition according to claim 1 or 2, wherein the rubber composition comprises first and second silica filler in an amount in a range of ≥ 150 phr to ≤ 180 phr, preferably in a range of ≥ 160 phr to ≤ 170 phr.

4. The rubber composition according to any one of the preceding claims, wherein the rubber composition comprises in a range of ≥ 70 phr to ≤ 100 phr, preferably in a range of ≥ 80 phr to ≤ 95 phr, of the first silica filler, preferably having a BET surface area in a range of ≥ 150 m²/g to ≤ 170 m²/g, determined according to ASTM D1993.

5. The rubber composition according to any one of the preceding claims, wherein the rubber composition comprises in a range of ≥ 65 phr to ≤ 85 phr, preferably in a range of ≥ 70 phr to ≤ 80 phr, of the second silica filler, preferably having a BET surface area in a range of ≥ 75 m²/g to ≤ 95 m²/g, **determined** according to ASTM D1993.

6. The rubber composition according to any one of the preceding claims, wherein the rubber composition comprises in a range of ≥ 5 phr to ≤ 20 phr of a mercaptosilane.

7. The rubber composition according to any one of the preceding claims, wherein the rubber composition comprises in a range of ≥ 5 phr to ≤ 15 phr of a mercaptosilane and in a range of ≥ 1 phr to ≤ 10 phr of a silane selected from a disulfide silane, a tetrasulfide silane, or a combination thereof.

8. The rubber composition according to one of the preceding claims, wherein the rubber composition comprises in a range of ≥ 10 phr to ≤ 30 phr, preferably in a range of ≥ 15 phr to ≤ 25 phr, of an alpha-methyl styrene resin.

9. The rubber composition according to any one of the preceding claims, wherein the composition comprises:
≥ 10 phr to < 35 phr, preferably ≥ 15 phr to < 30 phr, of NR; and/or
≥ 30 phr to < 60 phr, preferably ≥ 35 phr to < 55 phr, of BR; and/or
≥ 10 phr to < 30 phr, preferably ≥ 10 phr to < 25 phr, of the first SSBR; and/or
≥ 10 phr to < 40 phr, preferably ≥ 15 phr to < 30 phr, of the second SSBR.

10. A cross-linked rubber composition, **characterised in that** it is obtained by cross-linking a rubber composition according to one of claims 1 to 9.

11. The cross-linked rubber composition according to claim 10, wherein the composition has an E' value at -20 °C, determined by Dynamic Mechanical Analysis (DMA) in accordance with ISO 4664-1, in a range of ≥ 30 MPa to ≤ 55 MPa.

12. The cross-linked rubber composition according to claim 10 or 11, the composition having a hardness °Sh A, determined from durometer measurements according to ISO 48-4:2018, in a range from ≥ 42 °Sh A to ≤ 52 °Sh A.

13. The cross-linked rubber composition according to any one of claims 10 to 12, the composition having modulus M300%, determined from tensile measurements according to ISO 37 as further described in the specification, in a range from ≥ 4 MPa to ≤ 5.5 MPa.

14. A method of preparing a tyre, comprising the steps of:
- providing a tyre assembly comprising a cross-linkable rubber composition according to one of claims 1 to 9;
- cross-linking at least the cross-linkable rubber composition according to any one of claims 1 to 9 in the tyre assembly.

15. A tyre comprising a tyre tread, **characterised in that** the tyre tread comprises a cross-linked rubber composition according to any one of claims 10 to 13.

## Patentansprüche

1. Vernetzbare Kautschukzusammensetzung, wobei die vernetzbare Kautschukzusammensetzung pro hundert Gewichtsteile Kautschuk (phr) umfasst:
100 phr eines Gemischs eines Naturkautschuks (NR), eines Polybutadien-Kautschuks (BR), und eines ersten und zweiten lösungspolymerisierten Styrol-Butadien-Kautschuks (SSBR), wobei das Gemisch umfasst
≥ 10 phr bis ≤ 40 phr an NR,
≥ 20 phr bis ≤ 80 phr an BR,
≥ 10 phr bis ≤ 50 phr des ersten SSBR mit einer Glasübergangstemperatur T_{g}, bestimmt durch dynamische Differenzkalorimetrie (DSC) gemäß ISO 22768, in einem Bereich von ≥ -30°C bis ≤ 0°C, und
≥ 10 phr bis ≤ 50 phr des zweiten SSBR mit einer Glasübergangstemperatur T_{g}, bestimmt durch dynamische Differenzkalorimetrie (DSC) gemäß ISO 22768, in einem Bereich von ≥ -120°C bis ≤ -40°C,
≥ 60 phr bis ≤ 130 phr eines ersten Siliziumdioxid-Füllstoffs mit einer BET-Oberfläche im Bereich von ≥ 150 m²/g bis ≤ 200 m²/g, bestimmt gemäß ASTM D1993, und
≥ 50 phr bis ≤ 100 phr eines zweiten Siliziumdioxid-Füllstoffs mit einer BET-Oberfläche im Bereich von ≥ 70 m²/g bis ≤ 100 m²/g, bestimmt gemäß ASTM D1993, und
ein Harz,
wobei die Kautschukzusammensetzung in einem Bereich von ≥ 1 phr bis ≤ 40 phr an Magnesiumhydroxid umfasst.

2. Kautschukzusammensetzung nach Anspruch 1, wobei die Kautschukzusammensetzung in einem Bereich von ≥ 5 phr bis ≤ 35 phr, vorzugsweise in einem Bereich von ≥ 10 phr bis ≤ 30 phr, an Magnesiumhydroxid umfasst.

3. Kautschukzusammensetzung nach Anspruch 1 oder 2, wobei die Kautschukzusammensetzung ersten und zweiten Siliziumdioxid-Füllstoff in einer Menge in einem Bereich von ≥ 150 phr bis ≤ 180 phr, vorzugsweise in einem Bereich von ≥ 160 phr bis ≤ 170 phr, umfasst.

4. Kautschukzusammensetzung nach einem der vorhergehenden Ansprüche, wobei die Kautschukzusammensetzung in einem Bereich von ≥ 70 phr bis ≤ 100 phr, vorzugsweise in einem Bereich von ≥ 80 phr bis ≤ 95 phr, des ersten Siliziumdioxid-Füllstoffs, vorzugsweise mit einer BET-Oberfläche in einem Bereich von ≥ 150 m²/g bis ≤ 170 m²/g, bestimmt gemäß ASTM D1993, umfasst.

5. Kautschukzusammensetzung nach einem der vorhergehenden Ansprüche, wobei die Kautschukzusammensetzung in einem Bereich von ≥ 65 phr bis ≤ 85 phr, vorzugsweise in einem Bereich von ≥ 70 phr bis ≤ 80 phr, des zweiten Siliziumdioxid-Füllstoffs, vorzugsweise mit einer BET-Oberfläche in einem Bereich von ≥ 75 m²/g bis ≤ 95 m²/g, bestimmt gemäß ASTM D1993, umfasst.

6. Kautschukzusammensetzung nach einem der vorhergehenden Ansprüche, wobei die Kautschukzusammensetzung in einem Bereich von ≥ 5 phr bis ≤ 20 phr eines Mercaptosilans umfasst.

7. Kautschukzusammensetzung nach einem der vorhergehenden Ansprüche, wobei die Kautschukzusammensetzung in einem Bereich von ≥ 5 phr bis ≤ 15 phr eines Mercaptosilans und in einem Bereich von ≥ 1 phr bis ≤ 10 phr eines Silans ausgewählt aus einem Disulfidsilan, einem Tetrasulfidsilan, oder einer Kombination davon, umfasst.

8. Kautschukzusammensetzung nach einem der vorhergehenden Ansprüche, wobei die Kautschukzusammensetzung in einem Bereich von ≥ 10 phr bis ≤ 30 phr, vorzugsweise in einem Bereich von ≥ 15 phr bis ≤ 25 phr, eines alpha-Methylstyrolharzes umfasst.

9. Kautschukzusammensetzung nach einem der vorhergehenden Ansprüche, wobei die Zusammensetzung umfasst:
≥ 10 phr bis ≤ 35 phr, vorzugsweise ≥ 15 phr bis ≤ 30 phr, an NR; und/oder
≥ 30 phr bis ≤ 60 phr, vorzugsweise ≥ 35 phr bis ≤ 55 phr, an BR; und/oder
≥ 10 phr bis ≤ 30 phr, vorzugsweise ≥ 10 phr bis ≤ 25 phr, des ersten SSBR; und/oder
≥ 10 phr bis ≤ 40 phr, vorzugsweise ≥ 15 phr bis ≤ 30 phr, des zweiten SSBR.

10. Vernetzte Kautschukzusammensetzung, **dadurch gekennzeichnet, dass** diese durch Vernetzen einer Kautschukzusammensetzung nach einem der Ansprüche 1 bis 9 erhalten ist.

11. Vernetzte Kautschukzusammensetzung nach Anspruch 10, wobei die Zusammensetzung einen E' Wert bei -20 °C, bestimmt durch DMA-Messung gemäß ISO 4664-1, in einem Bereich von ≥ 30 MPa bis ≤ 55 MPa, aufweist.

12. Vernetzte Kautschukzusammensetzung nach Anspruch 10 oder 11, wobei die Zusammensetzung eine Härte °Sh A, bestimmt aus Durometermessungen gemäß ISO 48-4:2018, in einem Bereich von ≥ 42 °Sh A bis ≤ 52 °Sh A, aufweist.

13. Vernetzte Kautschukzusammensetzung nach einem der Ansprüche 10 bis 12, wobei die Zusammensetzung einen Modulus M300%, bestimmt aus Zugmessungen gemäß ISO 37 wie in der Beschreibung weiter beschrieben, in einem Bereich von ≥ 4 MPa bis ≤ 5,5 MPa, aufweist.

14. Verfahren zur Herstellung eines Reifens, umfassend die Schritte:
- Bereitstellen einer Reifenanordnung, die eine vernetzbare Kautschukzusammensetzung nach einem der Ansprüche 1 bis 9 umfasst;
- Vernetzen mindestens der Kautschukzusammensetzung nach einem der Ansprüche 1 bis 9 in der Reifenanordnung.

15. Reifen umfassend eine Reifenlauffläche, **dadurch gekennzeichnet, dass** die Reifenlauffläche eine vernetzte Kautschukzusammensetzung nach einem der Ansprüche 10 bis 13 umfasst.

## Revendications

1. Composition de caoutchouc réticulable, la composition de caoutchouc réticulable comprenant, pour cent parties en poids de caoutchouc (phr) :
100 phr d'un mélange d'un caoutchouc naturel (NR), d'un caoutchouc polybutadiène (BR), et d'un premier et d'un deuxième caoutchouc styrène-butadiène (SSBR) polymérisé en solution, le mélange comprenant
≥ 10 phr à ≤ 40 phr de NR,
≥ 20 phr à ≤ 80 phr de BR,
≥ 10 phr à ≤ 50 phr du premier SSBR ayant une température de transition vitreuse T_{g}, déterminée par calorimétrie différentielle à balayage (DSC) selon la norme ISO 22768, dans une plage de ≥ -30 °C à ≤ 0 °C, et
≥ 10 phr à ≤ 50 phr du deuxième SSBR ayant une température de transition vitreuse T_{g},
déterminée par calorimétrie différentielle à balayage (DSC) conformément à la norme ISO 22768, dans une plage de ≥ -120 °C à ≤ -40 °C,
≥ 60 phr à ≤ 130 phr d'une première charge de silice ayant une surface BET dans une plage de ≥ 150 m²/g à ≤ 200 m²/g, déterminée selon la norme ASTM D1993, et
≥ 50 phr à ≤ 100 phr d'une deuxième charge de silice ayant une surface BET comprise dans une plage de ≥ 70 m²/g à ≤ 100 m²/g, déterminée selon la norme ASTM D1993, et
une résine,
la composition de caoutchouc comprenant dans une plage de ≥ 1 phr à ≤ 40 phr d'hydroxyde de magnésium.

2. Composition de caoutchouc selon la revendication 1, dans laquelle la composition de caoutchouc comprend dans une plage de ≥ 5 phr à ≤ 35 phr, de préférence dans une plage de ≥ 10 phr à ≤ 30 phr, d'hydroxyde de magnésium.

3. Composition de caoutchouc selon la revendication 1 ou 2, dans laquelle la composition de caoutchouc comprend la première et la seconde charge de silice en une quantité dans une plage de ≥ 150 phr à ≤ 180 phr, de préférence dans une plage de ≥ 160 phr à ≤ 170 phr.

4. Composition de caoutchouc selon l'une quelconque des revendications précédentes, la composition de caoutchouc comprenant dans une plage de ≥ 70 phr à ≤ 100 phr, de préférence dans une plage de ≥ 80 phr à ≤ 95 phr, de la première charge de silice, ayant préférablement une surface BET dans une plage de ≥ 150 m²/g à ≤ 170 m²/g, déterminée selon la norme ASTM D1993.

5. Composition de caoutchouc selon l'une quelconque des revendications précédentes, la composition de caoutchouc comprenant dans une plage de ≥ 65 phr à ≤ 85 phr, de préférence dans une plage de ≥ 70 phr à ≤ 80 phr, de la seconde charge de silice, ayant préférablement une surface BET dans une plage de ≥ 75 m²/g à ≤ 95 m²/g, déterminée selon la norme ASTM D1993.

6. Composition de caoutchouc selon l'une quelconque des revendications précédentes, dans laquelle la composition de caoutchouc comprend dans une plage de ≥ 5 phr à ≤ 20 phr d'un mercaptosilane.

7. Composition de caoutchouc selon l'une quelconque des revendications précédentes, dans laquelle la composition de caoutchouc comprend dans une plage de ≥ 5 phr à ≤ 15 phr d'un mercaptosilane et dans une plage de ≥ 1 phr à ≤ 10 phr d'un silane choisi parmi un silane disulfure, un silane tétrasulfure ou une combinaison de ceux-ci.

8. Composition de caoutchouc selon l'une des revendications précédentes, dans laquelle la composition de caoutchouc comprend dans une plage de ≥ 10 phr à ≤ 30 phr, de préférence dans une plage de ≥ 15 phr à ≤ 25 phr, d'une résine d'alpha-méthylstyrène.

9. Composition de caoutchouc selon l'une quelconque des revendications précédentes, la composition comprenant :
≥ 10 phr à ≤ 35 phr, de préférence ≥ 15 phr à ≤ 30 phr de NR ; et/ou
≥ 30 phr à ≤ 60 phr, de préférence ≥ 35 phr à ≤ 55 phr de BR ; et/ou
≥ 10 phr à ≤ 30 phr, de préférence ≥ 10 phr à ≤ 25 phr du premier SSBR ; et/ou
≥ 10 phr à ≤ 40 phr, de préférence ≥ 15 phr à ≤ 30 phr, du deuxième SSBR.

10. Composition de caoutchouc réticulée, **caractérisée en ce qu'**elle est obtenue par réticulation d'une composition de caoutchouc selon l'une des revendications 1 à 9.

11. Composition de caoutchouc réticulée selon la revendication 10, dans laquelle la composition a une valeur E' à -20 °C, déterminée par analyse mécanique dynamique (DMA) conformément à la norme ISO 4664-1, dans une plage de ≥ 30 MPa à ≤ 55 MPa.

12. Composition de caoutchouc réticulée selon la revendication 10 ou 11, la composition ayant une dureté °Sh A , déterminée par des mesures de duromètre selon la norme ISO 48-4:2018, dans une plage de ≥ 42 °Sh A à ≤ 52 °Sh A.

13. Composition de caoutchouc réticulée selon l'une quelconque des revendications 10 à 12, la composition ayant un module M300%, déterminé par des mesures de traction selon la norme ISO 37 comme décrit en outre dans la description, dans une plage de ≥ 4 MPa à ≤ 5,5 MPa.

14. Procédé de préparation d'un pneu, comprenant les étapes de :
- fourniture d'un ensemble de pneu comprenant une composition de caoutchouc réticulable selon l'une des revendications 1 à 9 ;
- réticulation d'au moins la composition de caoutchouc réticulable selon l'une quelconque des revendications 1 à 9 dans l'ensemble de pneu.

15. Pneu comprenant au moins une bande de roulement de pneu, **caractérisé en ce que** la bande de roulement de pneu comprend une composition de caoutchouc réticulée selon l'une quelconque des revendications 10 à 13.
